# EUROPÄISCHE PATENTSCHRIFT

(11) **EP 0 526 947 B1**
(45) Veröffentlichungstag und Bekanntmachung des Hinweises auf die Patenterteilung: **10.12.1997**
(21) Anmeldenummer: 92202369.2
(22) Anmeldetag: 30.07.1992
(51) Int. Cl.: H04B 10/18, G02F 1/225

(54) **Anordnung zum elektrisch gesteuerten Modulieren eines Lichtstrahls**
Arrangement for the electrically controlled modulation of a light beam
Disposition pour la modulation à commande électrique d'un faisceau lumineux

(30) Priorität: 06.08.1991 CH 2326/91
(43) Veröffentlichungstag der Anmeldung: 10.02.1993
(73) Patentinhaber: ASCOM TECH AG, CH-3018 Bern (CH)
(72) Erfinder: Wang, Yu, Dr., CH-1700 Fribourg (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- WO-A-91/06882
- JOURNAL OF LIGHTWAVE TECHNOLOGY. Bd. LT-3, Nr. 1, Februar 1985, NEW YORK US H. HAGA ET AL 'An Integrated 1 X 4 High-Speed Optical Switch and Its Applications to a Time Demultiplexer'
- IEEE JOURNAL ON SELECTED AREAS IN COMMUNICATION Bd. 8, Nr. 7, September 1990, NEW YORK US S.K.KOROTKY ET AL 'Dual Parralel Modulation Schemes for Low- Distortion Analog Optical Transmission'

## Beschreibung

Die Erfindung betrifft eine Anordnung zum elektrisch gesteuerten Modulieren eines Lichtstrahles entsprechend dem Oberbegriff von Anspruch 1.

Der Beitrag von L. Altwegg und P. Vogel, "Optoelektrische Modulatoren und Schalter" in Ascom Technische Mitteilungen 1·91 (Mai 1991), S. 23-28 gibt einen Überblick über den heutigen Stand eines Teilbereiches der optischen Telekommunikationstechnik. Der Beitrag enthält unter anderem eine Übersicht über verschiedene Arten von Modulatoren. Eine Art ist unter der Bezeichnung Mach-Zehnder-Interferometer bekannt und basiert auf elektrisch beeinflussbaren Laufzeitunterschieden zwischen zwei parallel laufenden, kohärenten Lichtstrahlen.

Eine andere Übersicht über optoelektrische Modulatoren ist im Buch "Integrated Optical Circuits and Components", Lynn D. Hutcheson (Editor), Verlag Marcel Dekker, Inc., New York and Basel, 1987, ISBN 8-8247-7575-9 enthalten (Kapitel 6.3, Electro-Optic Waveguide Modulators and Switches).

Aus S.K. Korotky, R.M. de Ridder, "Dual Parallel Modulation Schemes for Low-Distortion Analog Optical Transmission", IEEE Journal on Selected Areas in Communications, Vol. 8, No. 7 (Sept. 1990), p. 1377-1380 ist eine Modulationsanordnung bekannt, bei der zwei optische Modulatoren parallel zueinander angeordnet sind. Durch eine derartige Anordnung ergibt sich eine wesentliche Reduzierung der bei einer analogen Modulation eines Laserstrahles auftretenden nichtlinearen Verzerrungen.

Aus L.M. Johnson, H.V. Roussel, "Reduction of intermodulation distortion in interferometric optical modulators", Optics Letters, Vol. 13, No. 10 (October 1988), p. 928-930 ist eine weitere Modulator-Anordnung bekannt, bei der ein ankommender, polarisierter Lichtstrahl in zwei Teilstrahlen aufgesplittet wird. Diese Teilstrahlen durchlaufen auf zwei parallelen Pfaden einen interferrometrischen Modulator, wobei sich beim Anlegen einer elektrischen Modulationsspannung eine optische Modulation ergibt. Auch diese Anordnung dient zum Herabsetzen der sich ergebenden nichtlineraren, optischen Verzerrungen.

Die genannten Modulationsanordnungen genügen keinen hohen Ansprüchen an die Qualität einer analogen Modulation. Es verbleiben vielmehr trotz gewisser Linearisierungseffekte erhebliche Verzerrungen auf dem optischen Signal. Weiter sind die erforderlichen Modulationsspannungen relativ hoch. Es ist daher die Aufgabe der Erfindung, eine weitere Modulationsordnung anzugeben, die bezüglich der Signalverzerrungen und der erforderlichen Modulationsspannungen weiter verbessert ist.

Die Lösung der Aufgabe wird durch den unabhängigen Anspruch angegeben. Die abhängigen Ansprüche geben Ausgestaltungen der Erfindung an.

Im folgenden wird die Erfindung anhand von drei Figuren beispielsweise näher beschrieben. Es zeigen:
Fig. 1 - erstes Blockschaltbild einer Modulationsanordnung einschliesslich der erforderlichen Ansteuereinheiten,
Fig. 2 - zweites Blockschaltbild der Modulationsanordnung,
Fig. 3 - Messdiagramm.

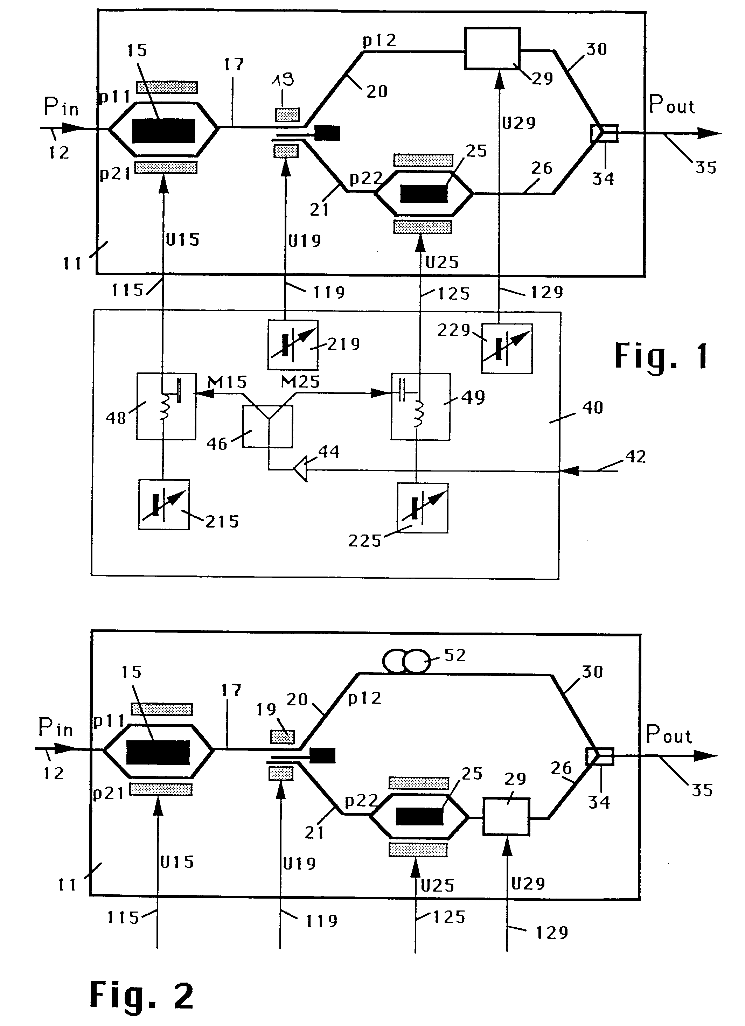

Fig. 1 zeigt das Blockschaltbild einer Modulationsanordnung 11 sowie der zugeordneten Ansteuereinheiten. Die Modulationsanordnung 11 umfasst zwei Modulatoren (15, 25) vom Typ des Mach-Zehnder-Interferometers, einen Richtungskoppler 19, einen Polarisationskonverter 29 und einen optischen Kuppler 34. Die Anordnung 11 besitzt einen optischen Eingang 12 und einen optischen Ausgang 35, die über zwei vorwiegend getrennte, parallel verlaufende optische Pfade miteinander verbunden sind. Diese Pfade sind als fette Linien dargestellt, die elektrischen Verbindungen als vergleichsweise dünne Linien.

Der erste Modulator 15 ist dem optischen Eingang 12 nachgeschaltet. Der Eingang des Modulators 15 teilt den ankommenden Lichtstrahl Pᵢₙ in zwei erste Teilstrahlen p₁₁ und p₂₁ auf, die parallel zueinander auf zwei verschiedenen Pfaden den Modulator 15 durchlaufen. Die beiden ersten Teilstrahlen p₁₁, p₂₁ werden durch den Ausgang des Modulators 15 wieder gemixt und erreichen gemeinsam über die Verbindung 17 den Richtungskoppler 19. Dem einen Ausgang 20 des Richtungskopplers 19 (zweiter Teilstrahl p₁₂) ist der Polarisationskonverter 29 nachgeschaltet, dem anderen Ausgang 21 (anderer zweiter Teilstrahl p₂₂) der zweite Modulator 25. Die Ausgänge 26, 30 dieser Einheiten 25, 29 sind schliesslich mit den Eingängen des optischen Kupplers 34 verbunden, dessen Ausgang den optischen Ausgang 35 der Anordnung 11 bildet. Der Kuppler 34 vereinigt die beiden zweiten Teilstrahlen p₁₂, p₂₂ wieder und gibt einen einzigen, abgehenden Lichtstrahl Pₒᵤₜ ab.

Die beiden Modulatoren 15, 25, der Richtungskoppler 19 und der Polarisationskonverter 29 besitzen je einen elektrischen Steuereingang 115, 125, 119 bzw. 129, über welche die zum Betrieb notwendigen elektrischen Spannungen an die Einheiten anlegbar sind.

Der Richtkoppler 19 erfordert eine fest eingestellte Gleichspannung U19, durch die ein fixer Kopplungsgrad δ bzw. Teilungsfaktor eingestellt wird. Als günstig hat sich ein Wert δ von etwa 1:8 bis 1:10 erwiesen. Dies bedeutet, dass die am Eingang 17 des Richtkopplers 19 anliegende Lichtleistung so aufgeteilt wird, dass der eine zweite Teilstrahl p₁₂ am Ausgang 20 des Kopplers 19 etwa die neunfache Lichtleistung gegenüber dem anderen zweiten Teilstrahl p₂₂ am Ausgang 21 aufweist.

Die beiden Modulatoren 15, 25 erhalten über die Eingänge 115, 125 ebenfalls je eine Gleichspannung U₁₅, U₂₅ und werden hierdurch geeignet vorgespannt. Sie erhalten weiter je eine Modulationsspannung M₁₅, M₂₅. Diese vier Spannungen U₁₅, U₂₅, M₁₅, M₂₅ können weitgehend frei gewählt werden. Es ist jedoch vorteilhaft, die Spannungen U₁₅, U₂₅ so zu wählen, dass die Phasenverschiebung Φ15 des Lichtes durch den ersten Modulator 15 -(1/3)π beträgt, und die Phasenverschiebung Φ25 durch den zweiten Modulator 25 +(2/3)π. In diesem Fall können die beiden Modulationsspannungen M₁₅ und M₂₅ gleich sein, was einer signalmässigen Parallelschaltung entspricht.

Der Polarisationskonverter 29 wird über eine weitere Vorspannung U29 so eingestellt, dass die zweiten Teilstrahlen p₁₂, p₂₂ auf den Zweigen 26 und 30 orthogonal zueinander polarisiert sind.

Die zur Erfüllung dieser angegebenen Bedingungen erforderliche Ansteuereinheit 40 umfasst vier Gleichspannungsquellen 215, 219, 225, 229 zum Liefern der Vorspannungen U₁₅, U₁₉, U₂₅, U₂₉. Sie (40) umfasst weiter eine von aussen, d.h. über den Modulationseingang 42 ansteuerbaren Verstärker 44, einen Signalteiler 46 zum Abgeben der Modulationsspannungen M₁₅, M₂₅ im Verhältnis von etwa 1:1, sowie zwei Koppelglieder 48, 49 zum Einkoppeln dieser Spannungen M₁₅, M₂₅ auf die Steuereingänge 115 bzw. 125.

Bei der erfindungsgemässen Modulationsanordnung 11 sind die beiden Modulatoren 15, 25 im Gegensatz zu den in der Einleitung gewürdigten, bekannten Anordnungen nicht parallel nebeneinander sondern in spezieller Weise seriell hintereinander geschaltet bzw. kaskadiert. Der zwischengeschaltete Richtungskoppler 19 dient zum geeigneten Aufteilen der beiden zweiten Teilstrahlen p₁₂, p₂₂. Durch den Polarisationskonverter 29 wird dafür gesorgt, dass - wie bereits gesagt - die auf den Verbindungen 26, 30 vorliegenden Teilstrahlen möglichst exakt orthogonal zueinander polarisiert sind. Bei Einhaltung dieser Bedingung ergibt sich im optischen Kuppler 34 eine vollständige Leistungsaddition der beiden zweiten Teilstrahlen p₁₂, p₂₂ und als Folge hiervon insgesamt eine ganz erhebliche Reduktion der Verzerrungen dritter Ordnung.

Fig. 2 zeigt das Blockschaltbild einer etwas abgewandelten, zweiten Modulatoranordnung 11. Bei dieser liegt der zweite Modulator 25 in Reihe mit dem Polarisationskonverter 29. Da sich hierdurch die Laufzeit des Teilstrahls p₂₂ gegenüber derjenigen des Teilstrahls p₁₂ etwas verlängert, ist zum Ausgleich ein Laufzeitglied 52, z.B. ein Stück Lichtleitfaser, in den Pfad des Teilstrahls p12 eingefügt. Die Modulationsanordnung 11 nach Fig. 2 arbeitet im wesentlichen gleich wie diejenige nach Fig. 1, ist im Aufbau jedoch etwas komplizierter. Insbesondere ist wegen des Laufzeitgliedes 52 eine Herstellung als optoelektrischer Integrationsbaustein kaum möglich.

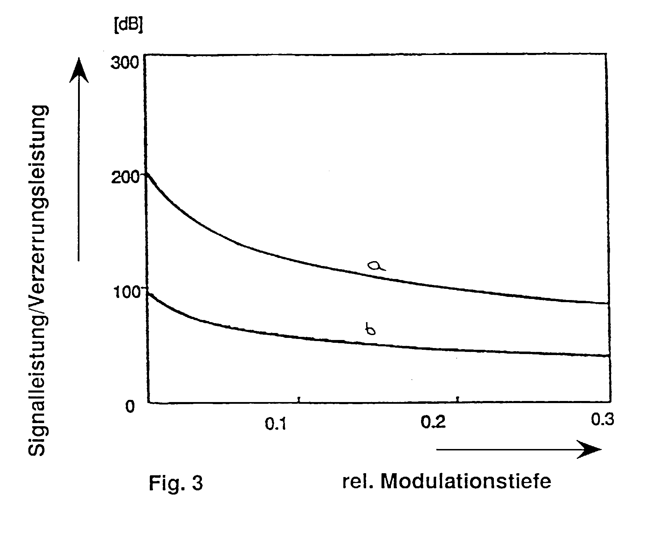

Fig. 3 zeigt ein Diagramm zur Darstellung der verbleibenden Modulationsverzerrungen. Auf der Abszisse ist die relative Modulationstiefe des Lichtstrahls Pₒᵤₜ aufgetragen, auf der Ordinate das Verhältnis von Signalleistung zur Leistung des Verzerrungsanteils in Dezibel (dB). Die Kurve a ist der Modulationsanordnung 11 entsprechend Fig. 1 zugeordnet, die Kurve b einem einzelnen Modulator, z.B. dem Modulator 15.

Es zeigt sich, dass die Verzerrungen mit wachsender Modulationstiefe zunehmen, jedoch für die erfindungsgemässe Modulationsanordnung 11 gegenüber einem einzelnen Modulator ganz erheblich reduziert sind. Die Modulationsanordnung 11 übertrifft aber auch die (nicht gezeigten) vergleichbaren Resultate der bekannten, eingangs erwähnten Modulationseinrichtungen. Weiter sind die zum Modulieren erforderlichen Spannungen M₁₅, M₂₅ gegenüber diesen Einrichtungen wesentlich niedriger, z.B. um den Faktor 3.

Die Modulationsanordnung 11 kann neben den bereits erwähnten Variationen auch noch auf andere Weise variiert werden. Im folgenden seien einige Varianten aufgezeigt:
· Der Richtungskoppler 19 kann wie in Fig. 1 gezeigt ein elektrooptisches Bauteil sein mit extern einstellbarem Teilungsverhältnis g. Der Richtungskoppler kann aber auch ein passives Bauelement sein, das ein fest eingestelltes Teilungsverhältnis besitzt, z.B. ein verschweisstes Glasfaserpaar.
· Die Modulatoren 15, 25 können als beliebige nichtreflektierende Interferometer oder als Delta-Beta-Koppler ausgebildet sein.
· Die Anordnung nach Fig. 2 kann dadurch verändert werden, dass der zweite Modulator 25 und der Polarisationskonverter 29 dem Ausgang 20 des Richtungskopplers nachgeschaltet werden. In diesem Fall muss das Teilungsverhältnis δ des Polarisationskonverters 29 invertiert sein, also etwa 9:1 betragen.
· Es ist vorteilhaft, wenn die beiden Modulatoren 15, 25, der Richtungskoppler 19 und der Polarisationskonverter 29 als ein integrierter elektrooptischer Funktionsbaustein ausgebildet sind.
· Die Steueranschlüsse 115, 125 der beiden Modulatoren 15, 25 können zu einem einzigen Anschluss elektrisch verbunden sein.

## Patentansprüche

1. Anordnung zum elektrisch gesteuerten Modulieren eines Lichtstrahles, umfassend
einen optischen Eingang (12) zum Eingeben eines ankommenden, zu modulierenden Lichtstrahls (Pᵢₙ),
einen optischen Ausgang (35) zum Ausgeben eines abgehenden, modulierten Lichtstrahls (Pₒᵤₜ),
zwei interferometrische Modulatoren (15, 25) mit zugeordneten elektrischen Steuereingängen (115, 125), und
zwei getrennte, parallel verlaufende optische Pfade,
dadurch gekennzeichnet,
- dass zusätzlich ein Richtungskoppler (19), ein Polarisationskonverter (29) und ein Kuppler (34) vorgesehen sind,
- dass der erste Modulator (15) dem optischen Eingang (12) der Anordnung nachgeschaltet und ausgebildet ist zum Aufteilen des ankommenden Lichtstrahles (Pᵢₙ) in zwei erste Teilstrahlen (p₁₁, p₂₁) und zum Wiederzusammenfügen dieser Teilstrahlen,
- dass der Richtungskoppler (19) mit seinem Eingang (17) an den Ausgang des ersten Modulators (15) angeschlossen ist und zwei Ausgänge (20, 21) aufweist, die den Beginn der zwei parallel verlaufenden Pfade darstellen,
- dass der zweite Modulator (25) und der Polarisationskonverter (29) den Ausgängen (20, 21) des Richtungskopplers (19) nachgeschaltet sind, und
- dass der Kuppler (34) ausgebildet ist zum Zusammenfügen der zwei parallel verlaufenden Pfade und zum Verbinden mit dem optischen Ausgang (35).

2. Anordnung nach Anspruch 1,
dadurch gekennzeichnet,
dass der zweite Modulator (25) zwischen den einen Ausgang (21) und der Polarisationskonverter (29) zwischen den anderen Ausgang (20) des Richtungskopplers (19) und den Kuppler (34) eingefügt sind.

3. Anordnung nach Anspruch 1,
dadurch gekennzeichnet,
dass der zweite Modulator (25) und der Polarisationskonverter (29) seriell zwischen den einen Ausgang (21) des Richtungskopplers (19) und den Kuppler (34) eingefügt sind, und
dass der andere Ausgang (20) des Richtungskopplers (19) direkt mit dem Kuppler (34) verbunden ist.

4. Anordnung nach Anspruch 1,
dadurch gekennzeichnet,
dass der zweite Modulator (25) und der Polarisationskonverter (29) seriell zwischen den einen Ausgang (21) des Richtungskopplers (19) und den Kuppler (34) eingefügt sind, und
dass zwischen den anderen Ausgang (20) des Richtungskopplers (19) und den Kuppler (34) ein optisches Laufzeitglied (52) eingefügt ist.

5. Anordnung nach Anspruch 1,
dadurch gekennzeichnet,
dass der Richtungskoppler (19) elektrisch steuerbar ist.

6. Anordnung nach Anspruch 1,
dadurch gekennzeichnet,
dass der Richtungskoppler (19) ein fest eingestelltes Teilungsverhältnis hat.

7. Anordnung nach Anspruch 5 oder 6,
dadurch gekennzeichnet,
dass der Richtungskoppler (19) einen Kopplungsgrad aufweist, der im Bereich von etwa 1:8 bis 1:10 liegt.

8. Anordnung nach einem der Ansprüche 2 bis 4,
dadurch gekennzeichnet,
dass der erste (15) und der zweite Modulator (25) mit je einer Vorspannung (U₁₅, U₂₅) derart beaufschlagt sind, dass die Phasenverschiebung des Lichtes durch den ersten Modulator (15) etwa -(1/3)Π und durch den zweiten Modulator (25) etwa +(2/3)Π beträgt,
dass der Polarisationskonverter (29) mit einer Steuerspannung (U₂₉) derart beaufschlagt ist, dass die Polarisationsrichtungen der beim Kuppler (34) zusammenlaufenden Teilstrahlen (P₁₂, P₂₂) der zwei parallel verlaufenden Pfade etwa orthogonal zueinander stehen, und
dass die Modulationsspannungen (M₁₅, M₂₅) zum Ansteuern der beiden Modulatoren (15, 25) etwa gleich gewählt sind.

## Claims

1. Arrangement for the electrically controlled modulation of a light beam, comprising
an optical input (12) allowing the input of an incoming light beam (Pᵢₙ) to be modulated,
an optical output (35) allowing the output of an outgoing modulated light beam (Pₒᵤₜ),
two interferometric modulators (15, 25) having associated electric control inputs (115, 125), and
two separate, parallel opticals paths,
characterised
- in that a directional coupler (19), a polarisation converter (29) and a coupler (34) are additionally provided,
- in that the first modulator (15) is connected to the optical input (12) of the arrangement and is designed to divide the incoming light beam (Pᵢₙ) into two first partial beams (p₁₁, p₂₁) and to recombine these partial beams,
- in that the input (17) of the directional coupler (19) is connected to the output of the first modulator (15) and the two outputs (20, 21) of the directional coupler (19) represent the beginning of the two parallel paths,
- in that the second modulator (25) and the polarisation converter (29) are connected to the outputs (20, 21) of the directional coupler (19), and
- in that the coupler (34) is designed to recombine the two parallel paths and to connect them to the optical output (35).

2. Arrangement according to claim 1, characterised in that the second modulator (25) is inserted between one of the outputs (21) of the directional coupler (19) and the coupler (34) while the polarisation converter (29) is inserted between the other output (20) of the directional coupler (19) and the coupler (34).

3. Arrangement according to claim 1, characterised in that the second modulator (25) and the polarisation converter (29) are serially inserted between one of the outputs (21) of the directional coupler (19) and the coupler (34), and
in that the other output (20) of the directional coupler (19) is directly connected to the coupler (34).

4. Arrangement according to claim 1, characterised in that the second modulator (25) and the polarisation converter (29) are serially inserted between one of the outputs (21) of the directional coupler (19) and the coupler (34), and
in that an optical delay unit (52) is inserted between the other output (20) of the directional coupler (19) and the coupler (34).

5. Arrangement according to claim 1, characterised in that the directional coupler (19) is electrically controllable.

6. Arrangement according to claim 1, characterised in that the directional coupler (19) has a fixed division ratio.

7. Arrangement according to claim 5 or 6, characterised in that the directional coupler (19) has a coupling coefficient which is comprised between 1:8 and 1:10 approximately.

8. Arrangement according to one of claims 2 to 4, characterised
- in that a respective bias voltage (U₁₅, U₂₅) is applied to the first (15) and the second modulator (25) in such a manner that the phase shift of the light by the first modulator (15) amounts to approximately -(1/3)π and that of the second modulator (25) amounts to approximately +(2/3)π,
- in that a control voltage (U₂₉) is applied to the polarisation converter (29) in such a manner that the polarisation directions of the partial beams (P₁₂, P₂₂) from the two parallel paths which unite at the coupler (34) are approximately orthogonal to each other, and in that the modulation voltages (M₁₅, M₂₅) for the control of the two modulators (15, 25) are chosen to be approximately equal.

## Revendications

1. Disposition pour la modulation à commande électrique d'un faisceau lumineux, comprenant
une entrée optique (12) permettant l'entrée d'un faisceau lumineux arrivant (Pᵢₙ) à moduler,
une sortie optique (35) permettant la sortie d'un faisceau lumineux sortant (Pₒᵤₜ) modulé,
deux modulateurs interférométriques (15, 25) ayant des entrées de commande électriques (115, 125) associées et deux chemins optiques parallèles séparés,
caractérisée en ce
- qu'un coupleur directionnel (19), un convertisseur de polarisation (29) et un coupleur (34) sont additionnellement prévus,
- que le premier modulateur (15) est connecté après l'entrée optique (12) de la disposition et présente une configuration permettant de diviser le faisceau lumineux arrivant (Pᵢₙ) en deux premiers faisceaux partiaux (p₁₁, p₂₁) et de recombiner ces faisceaux partiaux,
- que l'entrée (17) du coupleur directionnel (19) est connectée à la sortie du premier modulateur (15) et les deux sorties (20, 21) du coupleur directionnel (19) représentent le début desdits deux chemins parallèles,
- que le deuxième modulateur (25) et le convertisseur de polarisation (29) sont connectés après les sorties (20, 21) du coupleur directionnel, et
- que la configuration du coupleur (34) permet de recombiner les deux chemins parallèles et connecter ces derniers à la sortie optique (35).

2. Disposition selon la revendication 1, caractérisée en ce
que le deuxième modulateur (25) est inséré entre l'une des sorties (21) du coupleur directionnel (19) et le coupleur (34), alors que le convertisseur de polarisation (29) est inséré entre l'autre sortie (20) du coupleur directionnel (19) et le coupleur (34).

3. Disposition selon la revendication 1, caractérisée en ce
que le deuxième modulateur (25) et le convertisseur de polarisation (29) sont insérés en série entre l'une des sorties (21) du coupleur directionnel (19) et le coupleur (34), et
que l'autre sortie (20) du coupleur directionnel (19) est directement reliée au coupleur (34).

4. Disposition selon la revendication 1, caractérisée en ce
que le deuxième modulateur (25) et le convertisseur de polarisation (29) sont insérés en série entre l'une des sorties (21) du coupleur directionnel (19) et le coupleur (34), et
qu'un élément de retard optique (52) est inséré entre l'autre sortie (20) du coupleur directionnel (19) et le coupleur (34).

5. Disposition selon la revendication 1, caractérisée en ce
que le coupleur directionnel (19) est capable d'être commandé électriquement.

6. Disposition selon la revendication 1, caractérisée en ce
que le coupleur directionnel (19) présente un rapport de division fixe.

7. Disposition selon la revendication 5 ou 6, caractérisée en ce
que le coupleur directionnel (19) présente un coefficient de couplage compris entre 1:8 et 1:10 approximativement.

8. Disposition selon l'une des revendications 2 à 4, caractérisée en ce
qu'au premier (15) et au deuxième modulateur (25) est chaque fois appliquée une tension initiale (U₁₅, U₂₅) telle que le déphasage de la lumière par le premier modulateur (15) s'élève à approximativement -(1/3)π alors que celui du deuxième modulateur (25) s'élève à approximativement +(2/3)π,
qu'au convertisseur de polarisation (29) est appliquée une tension de commande (U₂₉) telle que les directions de polarisation des faisceaux partiaux (P₁₂, P₂₂) des deux chemins parallèles qui se réunissent au coupleur (34) sont approximativement orthogonales, et
- que les tensions de modulation (M₁₅, M₂₅) qui commandent les deux modulateurs (15, 25) sont choisies de sorte à être approximativement égales.
